# EUROPEAN PATENT SPECIFICATION

(11) **EP 1 164 678 B1**
(45) Date of publication and mention of the grant of the patent: **13.06.2007**
(21) Application number: 00125056.2
(22) Date of filing: 17.11.2000
(51) Int. Cl.: H02H 3/07, H02H 3/33

(54) **A system for the automatic closure of a switch**
System zum automatischen Schliessen eines Schalters
Système de fermeture automatique d'un interrupteur

(30) Priority: 13.06.2000 IT RM200319
(43) Date of publication of application: 19.12.2001
(73) Proprietor: BTICINO S.P.A., 20154 Milano (IT)
(72) Inventor: Re, Marcello, 21040 Venegono Superiore (Varese) (IT)
(74) Representative: Siniscalco, Fabio

(56) References cited:
- EP-A- 0 858 143
- EP-A- 1 005 133
- DE-A- 3 844 203
- FR-A- 2 696 054
- US-A- 4 600 962

## Description

The present invention relates to a system for the automatic closure of an electrical switch.

In electrical systems, switches which can open in response to an overload or to other potentially dangerous anomalous conditions are often used. A typical example of a switch of this type is a differential switch which is opened as a result of a leakage current greater than a predetermined safety limit. The use of a differential switch ensures effective protection against risks of electrocution and fire.

To protect people during direct contact, it is necessary to use differential switches with high sensitivity, that is, with an intervention threshold no greater than 30 mA. Unfortunately, owing to their sensitivity, these devices also operate when there are transient currents to earth, which may occur when the electrical system is subjected to voltage surges generated in the mains upstream of the switch, for example, as a result of the operation of switches in the medium-tension line, or as a result of direct or indirect lightning strikes to the supply lines. In these cases, the supply is therefore taken away from the loads of the system without the actual existence of conditions of risk to people or property. This leads to more or less serious problems such as, for example, in the industrial field, unnecessary production stoppages and, in the domestic field, problems with the preservation of foodstuffs owing to the stopping of refrigerators and freezers. Naturally, in order to restart the system, the differential switch must be closed manually. If the system is unattended, as is the case, for example, in an apartment which is temporarily uninhabited during a holiday period, the above-mentioned problems are inevitable.

To prevent these problems, it is known to use delayed differential switches, that is, switches which provide for delayed operation which makes them insensitive to transient currents to earth. The delay is adjusted to conform to the limits imposed by the safety standards, that is, so as not to cause irreversible damage to people in the event of electrocution. Nevertheless, the stress to which the human body is subjected with this type of device is still greater than that undergone with a device operating instantaneously and this solution is therefore not suitable in many applications.

Another known solution provides for the combined use of low-sensitivity differential switches for some loads, for example freezers, and high-sensitivity switches for other loads. However, this leads to a complexity of the system which is not always acceptable.

According to another solution, automatic re-closure systems are used. A system of this type, as known from the document FR 2696054 comprises a detector for detecting the open state of the switch, an electromechanical device for closing the switch, and an electronic control device for generating an activation signal for the electromechanical closure device in response to a switch open signal coming from the detector. The number of automatic re-closures can normally be programmed. If the cause of the operation of the switch persists after the last closure attempt, the closure system is deactivated.

This latter solution prevents permanent deactivation of a system purely because of a transient current. In practice, however, this system also has a weak point because, if it is not deactivated when it is no longer required, for example, upon returning home after the holidays, complete safety against direct contacts is lost. This can easily happen owing to the fact that the activation state of the system is normally indicated only by an indicator light which may not be very visible and may therefore easily be ignored. In these circumstances, if a person inadvertently comes into contact with live wires the person risks being subjected to several successive shocks because the differential switch is automatically re-closed after each opening.

The object of the invention is to prevent this risk by proposing a system for the automatic closure of the switch which ensures maximum safety in every situation.

This object is achieved, according to the invention, by virtue of the fact that the automatic closure system uses an anti-intrusion system as the device for indicating the activation state of the system.

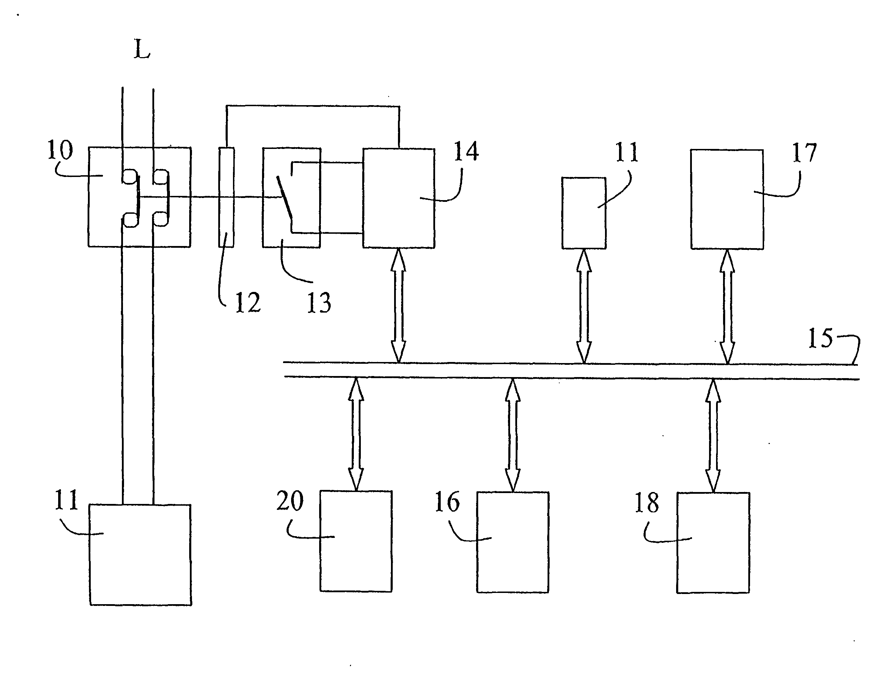

The invention will be understood better from the following detailed description of a non-limiting embodiment thereof, given with reference to the appended drawing in which the sole figure is a block diagram according to the invention.

The block 10 represents a differential switch, possibly associated with a thermomagnetic switch, disposed at the input of an electrical system comprising various loads represented by a single block 11, to be connected to an electrical supply line L.

Associated with the switch 10 are an electromechanical actuator device 12, for example, a motor closure device, and a low-power switch 13, that is, a so-called auxiliary contact which is opened or closed when the switch 10 is closed or opened, respectively. The auxiliary contact 13 constitutes a detector of the state of the switch 10 and is connected to a control module 14, preferably an electronic micro-controller device, in order to supply an "opening" signal thereto in the event of the operation of the differential switch. An output of the control module 14 is connected to the operating device 12.

The control module 14 is connected to a data-transmission bus 15 of an anti-intrusion system. Various devices of the anti-intrusion system, including a central control unit 16 of the system, an alarm 17, and an inserting device 18, that is, a device for activating the system, are connected to the bus 15. As is known, a bus of this type comprises a bifilar line to which the various devices are connected in parallel, each device having an associated configuring device which identifies its address and function.

When the differential switch 10 opens, the auxiliary contact 13 closes, thus supplying a closure-request signal to the control module 14. In response to this signal, the control module 14 sends a closure signal to the motor actuator device 12. This has the effect of resetting the differential switch 10 and closing its contacts. If the opening of the differential switch was caused by a transient current, the switch 10 remains closed; if, however, the operation was due to a permanent fault, the control module 14 puts the system into a locked-out state, that is, into a state in which the differential switch remains permanently open. This state may possibly be reached after several closure attempts performed at predetermined intervals. Both the number of operations and the duration of the intervals can be programmed by a suitable configuring device associated with the control module.

The activation and deactivation of the control module 14 are set in a manner such as to be conditional upon the activation and the deactivation of the anti-intrusion system. In practice, the inserting device 18 can be set so as to activate the automatic closure system and the anti-intrusion system simultaneously. It is thus impossible for the dangerous situation described above to arise since, in order to re-enter the area in which the automatic closure system has been activated, it is necessary to deactivate the anti-intrusion system. If this deactivation were inadvertently not performed, the alarm of the anti-intrusion system would give an effective indication of the activation state of the automatic closure system.

As can be confirmed from the foregoing explanation, the automatic closure system according to the invention allows an instantaneous, high-sensitivity differential switch to be used without the problems of the prior art described above, thus ensuring maximum safety against electrocution.

Moreover, by virtue of its particular integration with an anti-intrusion system, the system according to the invention can have some additional functions which are not present in conventional automatic closure systems. Amongst these are:
a remote-control capability for the closure and opening of the differential switch by means of the connection of a suitably configured remote-control device 20 to the bus 15 (naturally, in this case, it is essential for the motor actuator device 12 also to be arranged for opening the differential switch 10),
the possibility of connecting to the bus 15 an indicator, possibly incorporated in the control module 14, for providing a visual indication of the state of the differential switch 10,
the possibility of connecting to the bus 15 a telecommunications device, for example, a telephonic dialler which sends a technical alarm call to a preset telephone number if the automatic closure system is in a locked-out state; in this case, the user receiving the call will be able to send a command to the telephonic dialler which in turn will give a corresponding signal, by means of the bus 15, to the control module 14 to reclose the differential switch if the fault conditions have ceased, and
finally, the possibility of connecting an earth-fault simulation module to the bus to bring about operation of the differential switch when it is desired to check the effectiveness of the system.

## Claims

1. A system for the automatic closure of an electrical protection switch (10) comprising:
a detector (13) for detecting the open state of the switch, due to a fault,
an electromechanical device (12) for closing the switch,
an electronic control device (14) for generating an activation signal for the electromechanical device (12) in response to a switch open signal emitted by the detector (13),
a device for indicating the activation state of the system, to prevent risks of electrocution,
**characterized in that** the indicating device comprises an anti-intrusion system (15-18), activated simultaneously with the automatic closure system.

2. A system according to Claim 1, in which the anti-intrusion system comprises a data-transmission bus (15) and in which the electronic control device (14) is connected to the data-transmission bus (15).

3. A system according to Claim 2, comprising a remote control device (20) connected to the data-transmission bus (15) for sending to the electronic control device (14) signals for the closure and opening of the switch (10).

4. A system according to Claim 2 or Claim 3, comprising an indicator device connected to the data-transmission bus (15) for providing a visual indication of the state of the switch (10).

5. A system according to any one of Claims 2, 3 and 4, comprising a telecommunications device (21) connected to the data-transmission bus (15) for transmitting signals between the electromechanical control device (14) and a remote location.

6. A system according to any one of preceding claims 2 to 5 comprising an earth-fault simulator module connected to the data-transmission bus (15).

7. A system according to any one of the preceding claims, in which the electrical protection switch is a differential switch (10).

8. A system according to any one of the preceding claims, in which the electromechanical closure device is an electric motor device (12).

9. A system according to any one of the preceding claims, in which the detector is an auxiliary contact (13) associated with the switch (10).

## Patentansprüche

1. Ein System für das automatische Schließen eines elektrischen Schutzschalters (10), wobei das System folgende Merkmale aufweist:
einen Detektor (13) zum Erfassen des offenen Zustands des Schalters aufgrund eines Fehlers,
eine elektromechanische Vorrichtung (12) zum Schließen des Schalters,
eine elektronische Steuervorrichtung (14) zum Erzeugen eines Aktivierungssignals für die elektromechanische Vorrichtung (12) ansprechend auf ein Schalter-Offen-Signal, das durch den Detektor (13) emittiert wird,
eine Vorrichtung zum Anzeigen des Aktivierungszustands des Systems, um Risiken von Verletzungen durch Stromschlag vorzubeugen,
**dadurch gekennzeichnet, dass** die Anzeigevorrichtung ein Anti-Aufschalt-System (15 - 18) umfasst, das gleichzeitig mit dem automatischen Schließsystem aktiviert wird.

2. Ein System gemäß Anspruch 1, bei dem das Anti-Aufschalt-System einen Datenübertragungsbus (15) aufweist und bei dem die elektronische Steuervorrichtung (14) mit dem Datenübertragungsbus (15) verbunden ist.

3. Ein System gemäß Anspruch 2, das eine Fernsteuervorrichtung (20) aufweist, die mit dem Datenübertragungsbus (15) verbunden ist, zum Senden von Signalen zum Schließen und Öffnen des Schalters (10) an die elektronische Steuervorrichtung (14).

4. Ein System gemäß Anspruch 2 oder Anspruch 3, das eine Anzeigevorrichtung aufweist, die mit dem Datenübertragungsbus (15) verbunden ist, zum Bereitstellen einer visuellen Anzeige des Zustands des Schalters (10).

5. Ein System gemäß einem der Ansprüche 2, 3 und 4, das eine Telekommunikationsvorrichtung (21) aufweist, die mit dem Datenübertragungsbus (15) verbunden ist, zum Übertragen von Signalen zwischen der elektromechanischen Steuervorrichtung (14) und einem entfernten Ort.

6. Ein System gemäß einem der vorhergehenden Ansprüche 2 bis 5, das ein Erdschluss-Simulatormodul aufweist, das mit dem Datenübertragungsbus (15) verbunden ist.

7. Ein System gemäß einem der vorhergehenden Ansprüche, bei dem der elektrische Schutzschalter ein Differenzschalter (10) ist.

8. Ein System gemäß einem der vorhergehenden Ansprüche, bei dem die elektromechanische Schließvorrichtung eine Elektromotorvorrichtung (12) ist.

9. Ein System gemäß einem der vorhergehenden Ansprüche, bei dem der Detektor ein Hilfskontakt (13) ist, der dem Schalter (10) zugeordnet ist.

## Revendications

1. Système pour la fermeture automatique d'un interrupteur (10) de protection contre l'électricité, comprenant :
un détecteur (13) destiné à détecter l'état ouvert de l'interrupteur, dû à un défaut,
un dispositif électromécanique (12) destiné à fermer l'interrupteur,
un dispositif électronique (14) de commande permettant de produire un signal d'activation à destination du dispositif électromécanique (12) en réponse à un signal d'état ouvert d'interrupteur émis par le détecteur (13),
un dispositif permettant d'indiquer l'état d'activation du système, pour empêcher des risques d'électrocution,
**caractérisé en ce que** le dispositif d'indication comprend un système anti-intrusion (15 - 18), activé simultanément avec le système de fermeture automatique.

2. Système selon la revendication 1, dans lequel le système anti-intrusion comprend un bus (15) de transmission de données, et dans lequel le dispositif électronique (14) de commande est connecté avec le bus (15) de transmission de données.

3. Système selon la revendication 2, comprenant un dispositif (20) de commande à distance, connecté avec le bus (15) de transmission de données, permettant d'envoyer au dispositif électronique (14) de commande des signaux correspondant à la fermeture et à l'ouverture de l'interrupteur (10).

4. Système selon la revendication 2 ou la revendication 3, comprenant un dispositif indicateur, connecté avec le bus (15) de transmission de données, permettant d'obtenir une indication visuelle de l'état de l'interrupteur (10).

5. Système selon l'une quelconque des revendications 2, 3 et 4, comprenant un dispositif (21) de télécommunications, connecté avec le bus (15) de transmission de données, permettant de transmettre des signaux entre le dispositif électromécanique (14) de commande et un emplacement à distance.

6. Système selon l'une quelconque des revendications précédentes 2 à 5, comprenant un module simulateur de défaut à la terre connecté avec le bus (15) de transmission de données.

7. Système selon l'une quelconque des revendications précédentes, dans lequel l'interrupteur de protection contre l'électricité est un interrupteur différentiel (10).

8. Système selon l'une quelconque des revendications précédentes, dans lequel le dispositif électromécanique de fermeture est un dispositif (12) de moteur électrique.

9. Système selon l'une quelconque des revendications précédentes, dans lequel le détecteur est un contact auxiliaire (13) associé à l'interrupteur (10).
